(19)

Europäisches Patentamt

European Patent Office

Office européen des brevets

(11) **EP 4 779 365 A1**

(12) **EUROPEAN PATENT APPLICATION**
published in accordance with Art. 153(4) EPC

(43) Date of publication:
**22.07.2026 Bulletin 2026/30**

(21) Application number: **24878785.5**

(22) Date of filing: **23.09.2024**

(51) International Patent Classification (IPC):
**G02B 6/02** (2006.01)

(86) International application number:
**PCT/CN2024/120310**

(87) International publication number:
**WO 2025/082137 (24.04.2025 Gazette 2025/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.10.2023   CN 202311355306**

(71) Applicant: **Yangtze Optical Fibre and Cable Joint
Stock
Limited Company
Wuhan, Hubei 430074 (CN)**

(72) Inventors:
• **LI, Peng**
  **Wuhan, Hubei 430074 (CN)**
• **ZHANG, Lei**
  **Wuhan, Hubei 430074 (CN)**
• **LUO, Jie**
  **Wuhan, Hubei 430074 (CN)**
• **LI, Ying**
  **Wuhan, Hubei 430074 (CN)**
• **LI, Lin**
  **Wuhan, Hubei 430074 (CN)**

(74) Representative: **Lorenz Seidler Gossel Part. mbB
Widenmayerstr. 23
80538 München (DE)**

(54) **HOLLOW-CORE MICROSTRUCTURED FIBER WITH ADDITIVE MARKS, AND PREFORM AND
DRAWING DETECTION METHOD**

(57)    The present invention discloses a hollow-core microstructured optical fiber with an additive marking, a preform and a fiber drawing detection method. The optical fiber includes a cladding hollow-core sleeve and a plurality of anti-resonant microstructure units arranged on and attached to the inner wall of the cladding hollow-core sleeve. The anti-resonant microstructure units are configured to form an air fiber core region with an inscribed circle size thereof. The plurality of anti-resonant microstructure units are rotationally symmetric. One or more additive marking units are provided on the outer side of a fiber core, such that an end surface structure of the hollow-core microstructured optical fiber exhibits asymmetry. The area of the additive marking unit accounts for 0.002% - 2% of that of the cladding hollow-core sleeve. In the hollow-core microstructured optical fiber with the additive marking of the present invention, by means of the additive marking units, the anti-resonant microstructure units can be marked and identified in fiber drawing detection so as to evaluate the geometric uniformity of the hollow-core microstructured optical fiber, thereby providing reference and guidance for the subsequent production of a preform of the hollow-core microstructured optical fiber, and performing process adjustment and improvement in a timel manner.

**Fig. 2**

EP 4 779 365 A1

## Description

## Field of the Invention

The present invention belongs to the field of optical communication, and more particularly relates to a hollow-core microstructured optical fiber with an additive marking, a preform and a fiber drawing detection method.

## Background of the Invention

Hollow-core microstructured optical fibers have the characteristics of simple structure, hollow-core single-mode light guidance and wide transmission spectrum, and have important applications in the fields of light-filler interaction, non-linear optics, gas detection, gas laser generation, optofluidics, etc. A light guidance by large air-hole fiber core has the characteristics of ultra-low Rayleigh scattering, low nonlinear coefficient and tunable dispersion, and can provide a higher laser damage threshold, allowing potential applications in high-power laser transmission, ultraviolet/mid-infrared light transmission, pulse compression, optical soliton transmission, etc. Based on the air core having the characteristics of ultra-low loss, low dispersion, low nonlinearity, and propagation speed close to the speed of light, the development of hollow-core microstructured optical fiber communication transmission and communication devices may be realized, thereby laying a foundation for the construction and development of the next generation of communication systems with ultra-large capacity, low latency, and high-speed optical.

Even though the hollow-core microstructured optical fibers have great advantages in design and application, their transmission loss has been higher than that of traditional silica optical fibers. In recent years, it has been found that a hollow-core microstructured optical fiber with a reasonable structural design based on the principle of anti-resonance can effectively reduce the transmission loss, and have potentials to be used as optical fiber for ultra-long distance communication. Further reduction of attenuation is an important issue in the field of hollow-core microstructured optical fiber manufacturing.

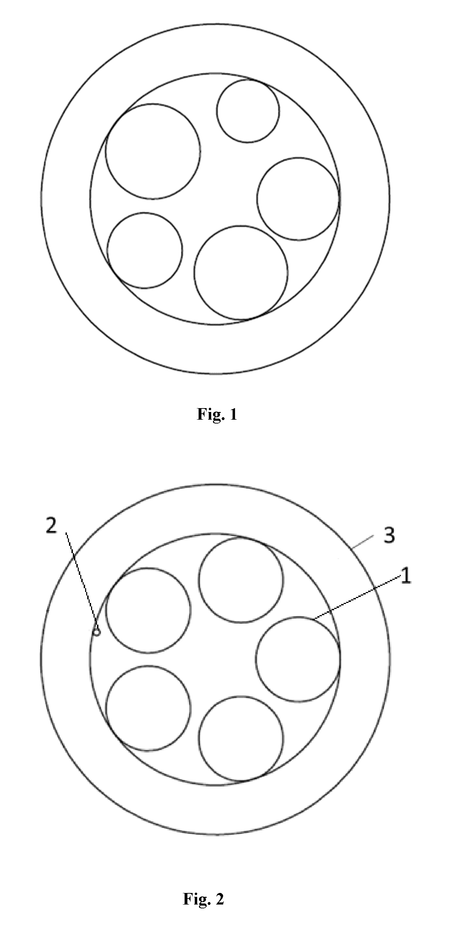

Although the known hollow-core anti-resonant optical fibers, especially those with nested structural elements, can significantly reduce the attenuation of optical fibers, in the manufacturing process of the hollow-core anti-resonant optical fibers, it is essentially different from that of existing solid-core optical fibers. The microscopic three-dimensional structure of hollow-core microstructured optical fibers is the basis for their light conduction. To maintain or form a specific microstructure, it is necessary to maintain gas introduction during the fiber drawing process. Due to the non-uniformity of raw materials, deviations of nested structural elements during the stacking process, and non-uniform thermal field distribution during the fiber drawing process, etc., the obtained hollow-core anti-resonant optical fibers may have anti-resonant structural elements with uneven sizes, as shown in Fig. 1. Such geometric non-uniformity will significantly affect the transmission loss of the hollow-core anti-resonant optical fibers. However, precisely since the manufacturing method is revolutionary compared with that of existing solid-core optical fibers, a common method of increasing the size of an optical fiber preform during solid-core optical fiber manufacturing cannot be used to mitigate the geometric non-uniformity.

## Summary of the Invention

In view of the above defects or improvement demands in the prior art, the present invention provides a hollow-core microstructured optical fiber with an additive marking, a preform and a fiber drawing detection method. Additive marking units of the hollow-core microstructured optical fiber can mark and identify anti-resonant microstructure units in fiber drawing detection, which has a guiding significance for the production and operation of the hollow-core microstructured optical fiber.

According to one aspect of the present invention, a hollow-core microstructured optical fiber with an additive marking is provided. The hollow-core microstructured optical fiber includes a cladding hollow-core sleeve and a plurality of anti-resonant microstructure units arranged on and attached to the inner wall of the cladding hollow-core sleeve. The anti-resonant microstructure units are configured to form an air fiber core region with an inscribed circle size thereof. The plurality of anti-resonant microstructure units are rotationally symmetric.

The distance D between the additive marking unit and an optical fiber structural center is, such that

$$E_D \leq 0.5\%$$

$$E_D = \int_0^{2\pi} \int_D^R f(r,\theta) r \, dr \, d\theta$$

Wherein, $E_D$ is an energy distribution ratio of a region on a cross section of the optical fiber where the distance from the optical fiber structural center is greater than D; and a point in a polar coordinate system with the optical fiber structural center as a pole within the cross section of the optical fiber has a polar radius of r and a polar angle of $\theta$, and $f(r, \theta)$ is a normalized optical field distribution function of the cross section of the optical fiber.

On the cross section of the hollow-core microstructured optical fiber, an outer edge area of a single additive marking unit accounts for 0.002% to 2% of an area of a cladding.

Preferably, the outer contour of the cladding hollow-core sleeve is circular. The additive marking unit is a solid glass rod or a hollow glass tube. The outer contour of the additive marking unit is circular, oval, rectangular and/or polygonal.

Preferably, the distance $D$ between the additive marking unit and the optical fiber structural center is such that $E_D \leq 0.1\%$. The distance $D$ between the additive marking unit and the optical fiber structural center satisfies $D \geq d$, wherein $d$ is the fiber core diameter of the hollow-core microstructured optical fiber.

Preferably, the additive marking unit is attached to the inner wall of the hollow-core sleeve, and preferably, on the outer side of the anti-resonant microstructure unit.

Preferably, the additive marking unit is attached between the anti-resonant microstructure units adjacent thereto and is close to one of the anti-resonant microstructure units.

Preferably, on the inner wall of the hollow-core sleeve, the radian between an attachment position of the additive marking unit and an attachment position of the anti-resonant microstructure unit close thereto is $R_1$, and the radian between attachment positions of the two adjacent anti-resonant microstructure units is $R_2$, wherein $R_1/R_2 = 1/6$ to $1/3$.

Preferably, the plurality of additive marking units are provided on the inner wall of the cladding hollow-core sleeve and have different outer contour shapes, types and/or areas.

According to another aspect of the present invention, a preform of the hollow-core microstructured optical fiber with an additive marking is further provided. The preform includes a glass member that is configured to be drawn into the hollow-core microstructured optical fiber with the additive marking.

According to yet another aspect of the present invention, a fiber drawing detection method for a preform of the hollow-core microstructured optical fiber is further provided. The fiber drawing detection method includes the following steps:

(1) cutting off the hollow-core microstructured optical fiber with the additive marking at a preset position;
(2) performing imaging on an end surface obtained after cutting off in step (1) by using transmission light or reflected light to obtain an end surface image of the hollow-core microstructured optical fiber at the position;
(3) performing, based on an additive marking unit on the end surface image, anti-resonant microstructure identification on the end surface image obtained in step (2) to obtain an image of anti-resonant microstructure units; and
(4) performing geometric parameter extraction on the image of the anti-resonant microstructure units obtained through identification in step (3) to evaluate geometric uniformity of the hollow-core microstructured optical fiber.

Preferably, a microscope is used in step (2) for imaging the end surface.

In general, compared with the prior art, the above technical solutions conceived by the present invention can achieve the following beneficial effects.

1) In the hollow-core microstructured optical fiber with the additive marking of the present invention, the anti-resonant microstructure units in the hollow-core microstructured optical fiber can be quickly distinguished, thereby facilitating on-line control of the size uniformity of the anti-resonant microstructure units, and advantageously reducing the transmission loss of the hollow-core microstructured optical fiber.

2) In the hollow-core microstructured optical fiber with the additive marking of the present invention, by means of the additive marking units, the anti-resonant microstructure units can be marked and identified in fiber fiber drawing detection so as to evaluate and analyze the geometric uniformity of the hollow-core microstructured optical fiber, thereby providing reference and guidance for the subsequent production of the preform of the hollow-core microstructured optical fiber, performing process adjustment and improvement in a timely manner to control the geometric uniformity, and thus ensuring the geometric uniformity of the hollow-core microstructured optical fiber during the subsequent manufacturing process of the hollow-core microstructured optical fiber from the preform.

3) During the coupling process of the hollow-core microstructured optical fiber, the different anti-resonant microstructure units are advantageously identified, thereby reducing the coupling loss of the hollow-core microstructured optical fiber.

## Brief Description of the Drawings

Fig. 1 is a schematic diagram of a hollow-core microstructured optical fiber without markings;
Fig. 2 is a schematic structural diagram of a preform of the hollow-core microstructured optical fiber with an additive marking provided by Embodiment 1 of the present invention;
Fig. 3 is a schematic diagram of pressure control during the fiber drawing process of a preform of the hollow-core microstructured optical fiber with the additive marking provided by Embodiment 1 of the present invention;
Fig. 4 is a schematic diagram of pressure control during the fiber drawing process of a preform of the hollow-core microstructured optical fiber with an additive marking provided by Embodiment 2 of the present invention; and
Fig. 5 is a schematic diagram of pressure control during the fiber drawing process of a preform of the hollow-core microstructured optical fiber with an additive marking provided by Embodiment 3 of the present invention.

In all the accompanying drawings, the same reference numerals are used to represent identical elements or structures, wherein,
1 - anti-resonant microstructure unit, 2 - marking unit, and 3 - cladding hollow-core sleeve.

## Detailed Description of the Embodiments

In order to make the objectives, technical solutions and advantages of the present invention clearer, the present invention will be further described with reference to the embodiments. It should be understood that the specific embodiments described herein are intended only to explain the present invention rather than to limit the present invention. In addition, the technical features involved in various implementations of the present invention described below may be combined with each other as long as they do not constitute a conflict with each other.

According to one aspect of the present invention, a hollow-core microstructured optical fiber with an additive marking is provided. The hollow-core microstructured optical fiber with an additive marking includes a cladding hollow-core sleeve 3 and a plurality of anti-resonant microstructure units 1 arranged on and attached to the inner wall of the cladding hollow-core sleeve 3. The anti-resonant microstructure units 1 have an air fiber core region internally tangent to the inner wall of the cladding hollow-core sleeve 3. The plurality of anti-resonant microstructure units 1 are rotationally symmetric.

One or more additive marking units 2 are provided within a region on the outer side of a fiber core where the energy distribution of the optical fiber is less than 0.5%, such that an end surface structure of the hollow-core microstructured optical fiber exhibits asymmetry.

The hollow-core microstructured optical fiber with the additive marking includes a cladding hollow-core sleeve 3 and a plurality of anti-resonant microstructure units 1 arranged on and attached to the inner wall of the cladding hollow-core sleeve 3. The anti-resonant microstructure units 1 have an air fiber core region internally tangent to the inner wall of the cladding hollow-core sleeve 3. The plurality of anti-resonant microstructure units 1 are rotationally symmetric.

One or more additive marking units 2 are provided within a region on the outer side of a fiber core where the energy distribution of the optical fiber is less than 0.5%, such that an end surface structure of the hollow-core microstructured optical fiber exhibits asymmetry.

On the cross section of the hollow-core microstructured optical fiber, the area of a single additive marking unit 2 accounts for 0.002% to 2% of the area of a cladding. The cladding includes an outer cladding formed by the hollow-core sleeve and an anti-resonant cladding formed by the anti-resonant microstructure units.

Preferably, the outer contour of the cladding hollow-core sleeve 3 is circular. The additive marking unit 2 is a solid glass rod or a hollow glass tube. The outer contour of the additive marking unit 2 is circular, oval, rectangular and/or polygonal.

Preferably, the additive marking unit 2 is provided within a region on the outer side of the fiber core where the energy distribution of the optical fiber is less than 0.1%; and the additive marking unit 2 is provided in a corresponding region of the optical fiber preform that forms a region where the distance between the fiber core and the optical fiber structural center exceeds a fiber core diameter.

Preferably, the additive marking unit 2 is attached to the inner wall of the cladding hollow-core sleeve 3, and preferably, on the outer side of the anti-resonant microstructure unit 1.

Preferably, the additive marking unit 2 is attached between the anti-resonant microstructure units 1 adjacent thereto and is close to one of the anti-resonant microstructure units 1.

Preferably, on the inner wall of the cladding hollow-core sleeve 3, the radian between an attachment position of the additive marking unit 2 and an attachment position of the anti-resonant microstructure unit 1 close thereto is $R_1$, and the radian between attachment positions of the two adjacent anti-resonant microstructure units 1 is $R_2$, wherein $R_1/R_2 = 1/6$ to $1/3$.

Preferably, the plurality of additive marking units 2 are provided on the inner wall of the cladding hollow-core sleeve 3 and have different outer contour shapes, types and/or areas. The types of the additive marking units 2 are solid-core or hollow-core additive marking units.

According to another aspect of the present invention, a preform of the hollow-core microstructured optical fiber with an additive marking is provided. The preform includes a glass member that is configured to be drawn into the hollow-core microstructured optical fiber with the additive marking.

At present, there is no mature and feasible technical solution for the geometric uniformity detection of anti-resonant microstructured optical fibers. It is conceived by the present invention that an image method is used for end surface detection, and extracting geometric feature to solve the problem of geometric uniformity detection. The difficulty of detection by the image method lies in that the end surface of an anti-resonant microstructured optical fiber theoretically exhibits perfect symmetry, making mutual distinguishing difficult. At present, there are already some anti-resonant microstructured optical fibers with asymmetric end surfaces. For example, in CN115185034A, one capillary tube is internally provided with a circular nested structure, while the remaining capillary tubes are each internally provided with a U-shaped nested structure, thereby forming a single-polarization hollow-core anti-resonant optical fiber that features single-mode performance, low loss, and a simple structure, which is suitable for long-distance scenarios and easy to fabricate. Proposed in Patent CN113885120A is a hollow-core microstructured optical fiber with a two-outer cladding structure. A first outer cladding defines the outer surface of an internal unclosed cladding. A second outer cladding is unclosed and is provided with a micro-channel running through the optical fiber. The second outer cladding is tightly connected to the first outer cladding and defines the inner surface of the internal unclosed cladding. A capillary tube layer as an anti-resonant layer is attached to the inner surface of the second outer cladding and defines, together with the second outer cladding, a fiber core with an effective radius. Capillary tubes in the capillary tube layer are spaced apart, and there is a gap between the adjacent capillary tubes. The first outer cladding can effectively ensure the mechanical reliability of the optical fiber, the second outer cladding has an unclosed structure, thereby greatly reducing the post-processing complexity of the optical fiber and improving the performance of the optical fiber, and thus solving the problems of loss characteristic and processing complexity of existing anti-resonant hollow-core microstructured optical fibers.

Although the above patents propose an asymmetric structural design of the hollow-core microstructured optical fiber, they mainly aim to solve the problem of polarization and the problem of post-processing of the hollow-core microstructured optical fiber in optical fiber sensing, and neither of them proposes a solution for controlling the geometric uniformity during the fiber drawing process of the hollow-core microstructured optical fiber. Therefore, no consideration is given to the imaging difficulty of the end surface of the optical fiber, nor to whether asymmetry is sufficiently obvious to distinguish the anti-resonant microstructure units on an end surface image. Compared with other types of markings, the additive marking unit requires no fine machining, does not affect an existing preform assembly process, and has the advantage of simple provision. However, based on the consideration of asymmetric marking, a problem that needs to be solved is whether asymmetric marking affects the performance of the hollow-core microstructured optical fiber and the difficulty of fiber drawing. Specifically, a sufficiently obvious additive marking unit requires a sufficiently large area, which makes it more likely to affect the transmission performance of the microstructured optical fiber and the fiber drawing fabrication difficulty.

Through an ingenious design, the additive marking unit is provided within a region on the outer side of the fiber core where the energy distribution of the optical fiber is less than 0.5%, and preferably, within a region on the outer side of the fiber core where the energy distribution of the optical fiber is less than 0.1%, so as to minimize the impact on the transmission performance of the hollow-core microstructured optical fiber. That is, the distance D between the additive marking unit and the optical fiber structural center is such that

$$E_D \leq 0.5\%$$

$$E_D = \int_0^{2\pi} \int_D^R f(r,\theta) r\, dr\, d\theta$$

Wherein, $E_D$ is an energy distribution ratio of a region on a cross section of the optical fiber where the distance from the optical fiber structural center is greater than D; and a point in a polar coordinate system with the optical fiber structural center as a pole within the cross section of the optical fiber has a polar radius of r and a polar angle of $\theta$, and $f(r, \theta)$ is a normalized optical field distribution function of the cross section of the optical fiber.

As a preferred solution, $E_D \leq 0.1\%$.

Preferably, the distance D between the additive marking unit and the optical fiber structural center satisfies D ≥ d, wherein d is the fiber core diameter of the hollow-core microstructured optical fiber.

As a preferred solution, the additive marking unit is provided on the inner wall of the hollow-core sleeve, on the outer side of the anti-resonant microstructure unit, i.e., between adjacent anti-resonant microstructure units, which exerts little impact on transmission performance, and less affects airflow within the sleeve during the fiber drawing process, thereby reducing sleeve deformation or the impact on the structure of the sleeve. More preferably, the additive marking unit is provided on the side close to an adjacent microstructure unit, which can effectively disrupt the symmetry of the end surface of the optical fiber, improve the recognizability of the anti-resonant microstructure units, and reduce the impact on the airflow within the sleeve during fiber drawing. However, a large amount of gas needs to be introduced during the fiber drawing process, which is precisely the key technology that distinguishes anti-resonant microstructured optical fibers from other types of optical fibers such as solid-core optical fibers, and photonic crystal optical fibers. Reducing the impact on the airflow introduced during fiber drawing is one of the key considerations for the provision of the additive marking unit. In addition, since gas needs to be introduced into the anti-resonant microstructure units during fiber drawing, and the gas pressure in the anti-resonant microstructure units may even exceeds the gas pressure in the center of the sleeve, it is necessary to avoid unexpected variations in the thickness and shape of the anti-resonant microstructure units caused by the provision of the additive marking unit, such as attachment to the additive marking unit and excessive thickness deviation, which would ultimately lead to deterioration of the optical fiber performance. The additive marking unit is preferably provided in such a way that the radian between an attachment position of the additive marking unit and an attachment position of the anti-resonant microstructure unit close thereto is R1, and the radian between attachment positions of two adjacent anti-resonant microstructure units is R2, wherein R1/R2 = 1/6 to 1/3, thereby ensuring that the additive marking unit with an easily observable area is provided at an appropriate position. Such a provision forms obvious asymmetric marking while exerting little impact on the anti-resonant microstructure units during the fabrication process, thereby preventing attachment between the additive marking unit and the anti-resonant microstructure units during fiber drawing, or shape distortion of the anti-resonant microstructure unit positioned close to the additive marking unit.

According to yet another aspect of the present invention, a fiber drawing detection method for a preform of the hollow-core microstructured optical fiber is further provided. The fiber drawing detection method includes the following steps:

    (1) cutting off the hollow-core microstructured optical fiber with the additive marking at a preset position;
    (2) performing imaging on the end surface obtained after cutting off in step (1) by using transmission light or reflected light to obtain an end surface image of the hollow-core microstructured optical fiber at the position;
    (3) performing, based on an additive marking unit 2 on the end surface image, anti-resonant microstructure identification on the end surface image obtained in step (2) to obtain an image of anti-resonant microstructure units 1; and
    (4) performing geometric parameter extraction on the image of the anti-resonant microstructure units obtained through identification in step (3) to evaluate geometric uniformity of the hollow-core microstructured optical fiber.

Preferably, a microscope is used in step (2) for imaging the end surface.

A typical hollow-core microstructured optical fiber with an additive marking includes anti-resonant microstructure units 1, an additive marking unit 2 and a cladding hollow-core sleeve 3. The number n of the anti-resonant microstructure units 1 satisfies n ≥ 3, and m additive marking units 2 are inserted between the anti-resonant microstructure units 1, wherein m ≥ 1.

Further, the anti-resonant microstructure unit 1 is composed of single-layer or multiple-layer components of a negative curvature structure.

Further, the additive marking unit 2 may be composed of a rod, a tube, a plate, or a combination thereof, and may be circular, oval, rectangular, polygonal, etc.

A fabrication method for the above hollow-core microstructured optical fiber with the additive marking includes the following steps:

    Step 1, fabricate the anti-resonant microstructure units 1. Specifically, a mother tube is drawn into a required capillary tube in a high-temperature fiber-drawing furnace; and the capillary tube may be subjected to secondary processing according to design requirements, such as cutting, polishing, and splicing.
    Step 2, fabricate the additive marking unit 2. Specifically, a mother tube or a mother rod is drawn into a required capillary tube or a capillary rod in the high-temperature fiber-drawing furnace; and the capillary tube or the capillary rod may be directly used as the additive marking unit 2, or may be subjected to secondary processing, such as cutting, polishing, and splicing and then used as the additive marking unit 2.
    Step 3, perform assembly to form a preform. Specifically, the anti-resonant microstructure units 1 obtained in step 1 and the additive marking unit 2 obtained in step 2 are stacked and assembled in the cladding hollow-core sleeve 3 to form a preform of the hollow-core microstructured optical fiber with the additive marking.
    Step 4, the preform of the hollow-core microstructured optical fiber with the additive marking in step 3 is directly drawn into the hollow-core microstructured optical fiber, or is first drawn into an intermediate preform and then sleeved into an intermediate sleeve to be drawn into the hollow-core microstructured optical fiber. During the fiber drawing process, by means of the additive marking units 2, the corresponding relationship between the anti-resonant microstructure units 1 in the optical fiber and the anti-resonant microstructure units 1 in the preform can be quickly distinguished, such that the size of the anti-resonant microstructure units 1 in the optical fiber is adjusted by controlling the magnitude of the gas pressure in the anti-resonant microstructure units 1 of the preform.

Further, the anti-resonant microstructure units 1, the additive marking unit 2 and the cladding hollow-core sleeve 3 may be made of a high-purity silicon dioxide material, a silica-doped material (which is doped with one or more elements such as germanium, fluorine, chlorine, boron, and aluminum), a multi-component glass material, a plastic material, etc.

Further, the hollow-core microstructured optical fiber has a cladding diameter greater than or equal to 100 um.

Further, the hollow-core microstructured optical fiber fabricated by the method of the present invention possesses a relatively low transmission loss, with a minimum of ≤ 30 dB/km, preferably ≤ 1 dB/km.

Further, the hollow-core microstructured optical fiber fabricated by the method of the present invention possesses a relatively low fusion splicing loss, with a self-fusion splicing loss of ≤ 0.5 dB.

The embodiments are as follows.

Embodiment 1

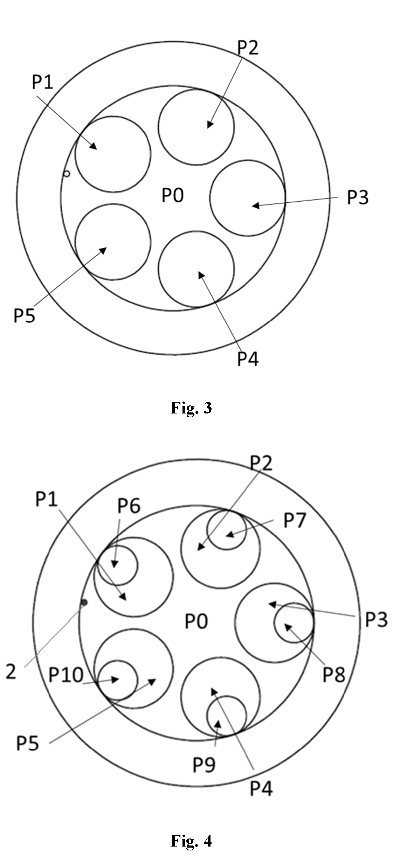

As shown in Fig. 2, one mother tube is first made into capillary tubes as anti-resonant microstructure units 1. The anti-resonant microstructure units 1 have an outer diameter of 6.7 mm and a wall thickness of 0.4 mm. Then, another line tube is drawn into a capillary tube as an additive marking unit 2. The additive marking unit 2 is a hollow-core capillary tube with an outer diameter of 1.5 mm and a wall thickness of 0.35 mm. The five anti-resonant microstructure units 1 and the one additive marking unit 2 are assembled in a cladding hollow-core sleeve 3 to form a preform of the hollow-core microstructured optical fiber with an additive marking as shown in Fig. 2. The preform of the hollow-core microstructured optical fiber with the additive marking may be directly drawn into a hollow-core microstructured optical fiber in a fiber-drawing furnace. However, during fiber drawing, due to temperature fluctuations, if no pressure is applied, it may lead to inconsistent sizes of the anti-resonant microstructure units. As shown in Fig. 1, the maximum deviation of the outer diameter of the anti-resonant microstructure units 1 is 13%. Accordingly, it is necessary to introduce gases at different pressures into the anti-resonant microstructure units to render the sizes thereof consistent. As shown in Fig. 3, magnitudes of gas pressures required for the anti-resonant microstructure units 1 are identified by means of the additive marking unit 2. P1, P2, P3, P4 and P5 are respectively the magnitudes of the gas pressures in the anti-resonant microstructure units 1, with values of 24.2 mbar, 26.6 mbar, 22.5 mbar, 26.7 mbar, and 24.5 mbar, respectively. The maximum deviation of the outer diameter of the anti-resonant microstructure units 1 is 3.5%, and the attenuation at 1550 nm is 4.2 dB/km. During fusion splicing of the hollow-core microstructured optical fiber, the orientation of the anti-resonant microstructure units 1 can be distinguished by means of the additive marking unit 2, thereby achieving more precise alignment, with a minimum fusion splicing loss of 0.44 dB.

Embodiment 2

As shown in Fig. 4, a mother tube is first fabricated into two sizes of capillary tubes, with large capillary tubes having an outer diameter of 8.2 mm and a wall thickness of 0.33 mm, and small capillary tubes having an outer diameter of 3.9 mm and a wall thickness of 0.36 mm. Then, a mother rod is drawn into an additive marking unit 2. The additive marking unit 2 is a solid-core round rod with a diameter of 1.36 mm. The large capillary tube and the small capillary tube are assembled into an anti-resonant microstructure unit 1 in a spliced manner. The five anti-resonant microstructure units 1 and the one additive marking unit 2 are assembled in a cladding hollow-core sleeve 3 to form a preform of the hollow-core microstructured optical fiber with an additive marking as shown in Fig. 4. The preform of hollow-core microstructured optical fiber with the additive marking may be first drawn into an intermediate preform in a fiber-drawing furnace, with the intermediate preform having an outer diameter of 8 mm, and then sleeved into an intermediate sleeve having an outer diameter of 17 mm and an inner diameter of 8.5 mm for fiber drawing. Like the previous embodiment, gases at different pressures are introduced into the anti-resonant microstructure units 1 to render the sizes thereof consistent. P1, P2, P3, P4 and P5 are respectively magnitudes of gas pressures in the large capillary tubes of the anti-resonant microstructure units, with values of 18.4 mbar, 19.6 mbar, 20.6 mbar, 20.8 mbar, and 19.5 mbar, respectively. P6, P7, P8, P9 and P10 are respectively magnitudes of gas pressures in the small capillary tubes of the anti-resonant microstructure units, with values of 82.4 mbar, 84.8 mbar, 85.2 mbar, 85.8 mbar, and 84.5 mbar, respectively. In the hollow-core microstructured optical fiber formed by fiber drawing, the maximum deviation of the outer diameter of the large capillary tubes in the anti-resonant microstructure units is 4.5%, the maximum deviation of the outer diameter of the small capillary tubes in the anti-resonant microstructure units is 2.7%, and the attenuation at 1550 nm is 0.5 dB/km. During fusion splicing of the hollow-core microstructured optical fiber, the orientation of the capillary tubes can be distinguished by means of the marking unit, thereby achieving more precise alignment through the rotation function of a fusion splicer, with a minimum fusion splicing loss of 0.32 dB.

Embodiment 3

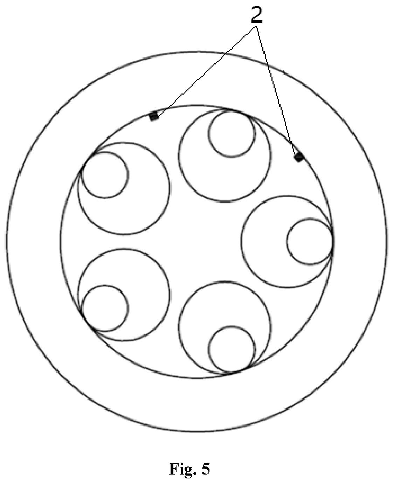

As shown in Fig. 5, a mother tube is first fabricated into two sizes of capillary tubes, with large capillary tubes having an outer diameter of 6.4 mm and a wall thickness of 0.25 mm, and small capillary tubes having an outer diameter of 3.2 mm and a wall thickness of 0.28 mm. Then, a square mother rod is drawn into additive marking units 2. The additive marking units 2 are solid square rods with a side length of 0.95 mm. The large capillary tube and the small capillary tube are assembled into the anti-resonant microstructure unit 1 in a splice manner. The five anti-resonant microstructure units 1 and the two additive marking unit 2 are assembled in a cladding hollow-core sleeve 3 to form a preform of the hollow-core microstructured optical fiber with additive markings as shown in Fig. 5. The preform of the hollow-core microstructured optical fiber with the additive markings may be first drawn into an intermediate preform in a fiber-drawing furnace, with the intermediate preform having an outer diameter of 6.2 mm, and then sleeved into an intermediate sleeve having an outer diameter of 13 mm and an inner diameter of 6.8 mm for fiber drawing.

Like the previous embodiment, gases at different pressures are introduced into the anti-resonant microstructure units 1 to render the sizes thereof consistent. P1, P2, P3, P4 and P5 are respectively magnitudes of gas pressures in the large capillary tubes of the anti-resonant microstructure units 1, with values of 33.6 mbar, 33.9 mbar, 34.5 mbar, 34.8 mbar, and 34.5 mbar, respectively. P6, P7, P8, P9 and P10 are respectively magnitudes of gas pressures in the small capillary tubes of the anti-resonant microstructure units 1, with values of 112.2 mbar, 112.8 mbar, 113.2 mbar, 113.8 mbar, and 112.4 mbar, respectively. In the hollow-core microstructured optical fiber formed by fiber drawing, the maximum deviation of the outer diameter of the large capillary tubes in the anti-resonant microstructure units is 2.9%, the maximum deviation of the outer diameter of the small capillary tubes in the anti-resonant microstructure units is 2.5%, and the attenuation at 1550 nm is 0.4 dB/km. During fusion splicing of the hollow-core microstructured optical fiber, the orientation of the capillary tubes can be distinguished by means of the marking units, thereby achieving more precise alignment through the rotation function of a fusion splicer, with a minimum fusion splicing loss of 0.28 dB.

It will be readily understood by a person skilled in the art that foregoing descriptions are merely preferred embodiments of the present invention, but are not intended to limit the present invention. Any modifications, equivalent replacements, improvements, etc. made within the spirit and principle of the present invention shall fall within the protection scope of the present invention.

**Claims**

1. A hollow-core microstructured optical fiber with an additive marking, comprising:

    a cladding hollow-core sleeve and a plurality of anti-resonant microstructure units arranged on and attached to an inner wall of the cladding hollow-core sleeve, the anti-resonant microstructure units are configured to form an air fiber core region with an inscribed circle size thereof; the plurality of anti-resonant microstructure units are rotationally symmetric; one or more additive marking units are provided on an outer side of a fiber core, such that an end surface structure of the hollow-core microstructured optical fiber exhibits asymmetry; a distance D between the additive marking unit and an optical fiber structural center is such that

$$E_D \leq 0.5\%$$

$$E_D = \int_0^{2\pi} \int_D^R f(r,\theta) r \, dr \, d\theta$$

wherein $E_D$ is an energy distribution ratio of a region on a cross section of the optical fiber where the distance from the optical fiber structural center is greater than D; and a point in a polar coordinate system with the optical fiber structural center as a pole within the cross section of the optical fiber has a polar radius of r and a polar angle of $\theta$, and $f(r, \theta)$ is a normalized optical field distribution function of the cross section of the optical fiber; and on the cross section of the hollow-core microstructured optical fiber, an outer edge area of a single additive marking unit accounts for 0.002% to 2% of an area of a cladding.

2. The hollow-core microstructured optical fiber with the additive marking according to claim 1, wherein an outer contour of the cladding hollow-core sleeve is circular; the additive marking unit is a solid glass rod or a hollow glass tube, and an outer contour of the additive marking unit is circular, oval, rectangular and/or polygonal.

3. The hollow-core microstructured optical fiber with the additive marking according to claim 1 or 2, wherein the distance D between the additive marking unit and the optical fiber structural center is such that $E_D \leq$ 0.1%; the distance $D$ between the additive marking unit and the optical fiber structural center satisfies D $\geq$ d, wherein d is the fiber core diameter of the hollow-core microstructured optical fiber.

4. The hollow-core microstructured optical fiber with the additive marking according to claim 3, wherein the additive marking unit is attached to the inner wall of the hollow-core sleeve, and preferably, on an outer side of the anti-resonant microstructure unit.

5. The hollow-core microstructured optical fiber with the additive marking according to claim 4, wherein the additive marking unit is attached between the anti-resonant microstructure units adjacent thereto and is close to one of the anti-resonant microstructure units.

6. The hollow-core microstructured optical fiber with the additive marking according to claim 5, wherein on the inner wall of the hollow-core sleeve, a radian between an attachment position of the additive marking unit and an attachment position of the anti-resonant microstructure unit close thereto is $R_1$, and a radian between attachment positions of the two adjacent anti-resonant microstructure units is $R_2$, wherein $R_1/R_2$ = 1/6 to 1/3.

7. The hollow-core microstructured optical fiber with the additive marking according to claim 1, wherein the plurality of additive marking units are provided on the inner wall of the cladding hollow-core sleeve and have different outer contour shapes, types and/or areas.

8. A preform of a hollow-core microstructured optical fiber with the additive marking, comprising:
a glass member that is configured to be drawn into the hollow-core microstructured optical fiber with the additive marking according to any one of claims 1 to 7.

9. A fiber drawing detection method for a preform of a hollow-core microstructured optical fiber , comprising the following steps:

(1) cutting off the hollow-core microstructured optical fiber with the additive marking according to any one of claims 1 to 7 at a preset position;
(2) performing imaging on an end surface obtained after cutting off in step (1) by using transmission light or reflected light to obtain an end surface image of the hollow-core microstructured optical fiber at the position;
(3) performing, based on an additive marking unit on the end surface image, anti-resonant microstructure identification on the end surface image obtained in step (2) to obtain an image of anti-resonant microstructure units; and
(4) performing geometric parameter extraction on the image of the anti-resonant microstructure units obtained through identification in step (3) to evaluate a geometric uniformity of the hollow-core microstructured optical fiber.

10. The fiber drawing detection method for the preform of the hollow-core microstructured optical fiber according to claim 9, wherein a microscope is used in step (2) for imaging the end surface.

**Fig. 1**

**Fig. 2**

**Fig. 3**

**Fig. 4**

Fig. 5

## INTERNATIONAL SEARCH REPORT

| International application No. |
| --- |
| **PCT/CN2024/120310** |

| A. | CLASSIFICATION OF SUBJECT MATTER |
| --- | --- |

G02B 6/02(2006.01)i

According to International Patent Classification (IPC) or to both national classification and IPC

| B. | FIELDS SEARCHED |
| --- | --- |

Minimum documentation searched (classification system followed by classification symbols)

IPC，CPC：G02B

Documentation searched other than minimum documentation to the extent that such documents are included in the fields searched

Electronic data base consulted during the international search (name of data base and, where practicable, search terms used)

CNTXT, ENTXTC: 标志, 标记, 反共振, 反谐振, 光纤, 光子晶体, 识别, 折射率

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 102066996 A (CORNING INC.) 18 May 2011 (2011-05-18)<br>  entire document | 1-10 |
| A | CN 108919417 A (BEIHANG UNIVERSITY) 30 November 2018 (2018-11-30)<br>  entire document | 1-10 |
| A | CN 111095059 A (UNIVERSITY OF SOUTHAMPTON) 01 May 2020 (2020-05-01)<br>  entire document | 1-10 |
| A | CN 111999800 A (SHANGHAI JIAO TONG UNIVERSITY) 27 November 2020<br>(2020-11-27)<br>  entire document | 1-10 |
| A | CN 113939482 A (HERAEUS QUARZGLAS GMBH & CO. KG) 14 January 2022<br>(2022-01-14)<br>  entire document | 1-10 |
| A | CN 115521059 A (YANGTZE OPTICAL FIBRE AND CABLE JOINT STOCK CO., LTD.)<br>27 December 2022 (2022-12-27)<br>  entire document | 1-10 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 January 2025** | **10 January 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

# EP 4 779 365 A1

## INTERNATIONAL SEARCH REPORT

| | International application No. |
|---|---|
| | **PCT/CN2024/120310** |

### C. DOCUMENTS CONSIDERED TO BE RELEVANT

| Category* | Citation of document, with indication, where appropriate, of the relevant passages | Relevant to claim No. |
|---|---|---|
| A | CN 115572058 A (HANGZHOU INSTITUTE FOR ADVANCED STUDY, UCAS et al.) 06 January 2023 (2023-01-06)<br>    entire document | 1-10 |
| A | CN 116639867 A (YANGTZE OPTICAL FIBRE AND CABLE JOINT STOCK CO., LTD.) 25 August 2023 (2023-08-25)<br>    entire document | 1-10 |
| A | JP 2013001626 A (SUMITOMO ELECTRIC INDUSTRIES, LTD.) 07 January 2013 (2013-01-07)<br>    entire document | 1-10 |
| A | WO 2018067445 A2 (THE GOVERNMENT OF THE UNITED STATES OF AS REPRESENTED BY THE SECRETARY OF THE NAVY) 12 April 2018 (2018-04-12)<br>    entire document | 1-10 |
| PX | CN 117420632 A (YANGTZE OPTICAL FIBRE AND CABLE JOINT STOCK CO., LTD.) 19 January 2024 (2024-01-19)<br>    description, paragraphs 35-82, and figures 1-5 | 1-10 |

Form PCT/ISA/210 (second sheet) (July 2022)

## INTERNATIONAL SEARCH REPORT
### Information on patent family members

| International application No. |
|---|
| **PCT/CN2024/120310** |

| Patent document cited in search report | | | Publication date (day/month/year) | Patent family member(s) | | | Publication date (day/month/year) |
|---|---|---|---|---|---|---|---|
| CN | 102066996 | A | 18 May 2011 | US | 2009320526 | A1 | 31 December 2009 |
| | | | | US | 8133593 | B2 | 13 March 2012 |
| | | | | WO | 2009157977 | A1 | 30 December 2009 |
| | | | | JP | 2011526704 | A | 13 October 2011 |
| | | | | EP | 2294463 | A1 | 16 March 2011 |
| CN | 108919417 | A | 30 November 2018 | None | | | |
| CN | 111095059 | A | 01 May 2020 | US | 2020278491 | A1 | 03 September 2020 |
| | | | | US | 11215751 | B2 | 04 January 2022 |
| | | | | JP | 2020533264 | A | 19 November 2020 |
| | | | | JP | 7193530 | B2 | 20 December 2022 |
| | | | | EP | 3682273 | A1 | 22 July 2020 |
| | | | | EP | 3682273 | B1 | 05 June 2024 |
| | | | | DK | 3682273 | T3 | 26 August 2024 |
| | | | | WO | 2019053412 | A1 | 21 March 2019 |
| | | | | GB | 201714739 | D0 | 25 October 2017 |
| | | | | GB | 2566466 | A | 20 March 2019 |
| CN | 111999800 | A | 27 November 2020 | None | | | |
| CN | 113939482 | A | 14 January 2022 | EP | 3766842 | A1 | 20 January 2021 |
| | | | | US | 2022227658 | A1 | 21 July 2022 |
| | | | | WO | 2021009208 | A1 | 21 January 2021 |
| | | | | JP | 2022541097 | A | 22 September 2022 |
| CN | 115521059 | A | 27 December 2022 | None | | | |
| CN | 115572058 | A | 06 January 2023 | None | | | |
| CN | 116639867 | A | 25 August 2023 | None | | | |
| JP | 2013001626 | A | 07 January 2013 | JP | 5644692 | B2 | 24 December 2014 |
| WO | 2018067445 | A2 | 12 April 2018 | WO | 2018067445 | A3 | 31 May 2018 |
| CN | 117420632 | A | 19 January 2024 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 115185034 A

- CN 113885120 A